# DEMANDE DE BREVET EUROPEEN

(11) **EP 4 386 042 A1**
(43) Date de publication de la demande: **19.06.2024**
(21) Numéro de dépôt: 23307227.1
(22) Date de dépôt: 15.12.2023
(51) Int. Cl.: C08J 5/18

(54) **FILM ALIMENTAIRE THERMOFORMABLE**

(30) Priorité: 15.12.2022 FR 2213486
(71) Demandeur: Toray Films Europe, 01700 Saint-Maurice-de-Beynost (FR)
(72) Inventeur: GAMBUT-GAREL, Lucile, 69003 LYON (FR); WADIN, Ludovic, 69370 SAINT DIDIER AU MONT D'OR (FR)
(74) Mandataire: Plasseraud IP

(57) **Abrégé**

La présente divulgation concerne un film thermoformable orienté biaxialement, comprenant une couche présentant une épaisseur comprise entre 4 µm et 20 µm, ladite couche comprenant :
• au moins un composant P1 ; et
• au moins un polyéthylène téréphtalate P2 ;
ledit composant P1 étant choisi parmi les copolyesters P1I, P1C, P1F et leurs mélanges :
➢ P1I comprenant les unités monomériques suivantes : 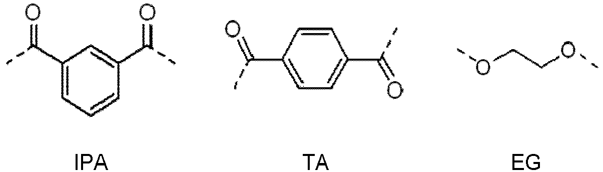 > P1C comprenant les unités monomériques suivantes : 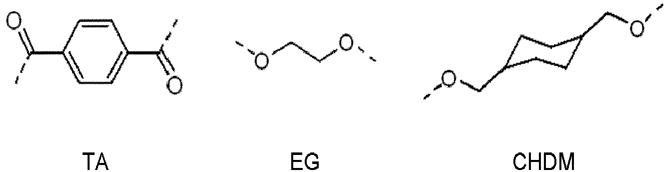 ➢ P1F comprenant les unités monomériques suivantes : 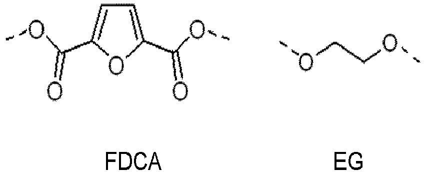 dans lesquelles chaque occurrence de 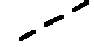 représente une liaison vers une autre unité monomérique, la proportion totale d'unités IPA, FDCA et CHDM, par rapport au nombre total d'unités monomériques du composant P1 et du polyéthylène téréphtalate P2, étant comprise entre 3% molaire et 40% molaire.

## Description

### Domaine technique

La présente divulgation relève du domaine des films à base de polyéthylène téréphtalate (PET) et de copolymère de polyéthylène téréphtalate. Plus particulièrement, la présente divulgation concerne des films thermoformables destinées à la fabrication d'emballages alimentaires.

### Technique antérieure

L'industrie de l'emballage est en constante adaptation afin de respecter les évolutions de réglementations et afin de satisfaire les consommateurs. Le secteur industriel qui génère le plus grand nombre d'emballages est l'industrie agroalimentaire. L'emballage alimentaire doit respecter de nombreux critères, par exemple, en fonction des pays, par exemple la réglementation européenne n°1935/2004 sur le contact alimentaire et en particulier la réglementation européenne n°10/2011 pour les matériaux plastiques pour le contact alimentaire.

Ainsi, un emballage alimentaire doit avoir une parfaite innocuité et doit être inerte chimiquement par rapport à son contenu. Les rôles de l'emballage alimentaire sont multiples, on peut citer par exemple, la protection du contenu contre l'environnement extérieur (dioxygène et vapeur d'eau), la conservation des propriétés nutritionnelles et organoleptiques du contenu et le vecteur de communication via son design et l'inscription d'informations spécifiques.

Afin qu'un emballage alimentaire puisse jouer son rôle de vecteur de communication, la surface externe du film doit être un bon support d'impression.

Différents types d'emballages alimentaires sont proposés, notamment en fonction du contenu à protéger, par exemple on peut citer les emballages alimentaires dits « souples ou flexibles » utilisés, notamment, pour la conservation du café et des produits déshydratés (soupe en poudre, chips, snacks). Ce type d'emballages est généralement constitué d'une structure multicouche composée de plusieurs films plastiques de composition polymériques différentes. Certains sont composés de films PET métallisés avec de l'aluminium, de films PET imprimables et de films polyéthylène (PE).

Pour certains contenus alimentaires, il est préférable d'utiliser un emballage thermoformé. Les films thermoformables en PET sont particulièrement intéressants du fait de leurs propriétés et de leurs faibles coûts. Ces films sont généralement fabriqués avec du PET amorphe produit par procédé Cast. Or, avec le procédé Cast il n'est pas possible de produire un film ayant une planéité permettant d'obtenir des impressions de qualité.

Si les films PET orientés biaxialement sont bien connus pour la qualité des impressions que l'on peut obtenir, le process de fabrication des film PET orientés biaxialement rend l'étape de thermoformage très délicate. En effet, le film obtenu a tendance à craquer rapidement pendant le procédé de thermoformage.

Par ailleurs, dans un souci constant de diminution de l'impact sur l'environnement, il serait bénéfique de disposer de film thermoformable avec une épaisseur la plus fine possible.

Un objectif de la présente invention est de proposer un film PET bi-orienté, qui soit thermoformable et imprimable.

Un autre objectif de la présente invention est que ce film thermoformable présente une épaisseur inférieure ou égale à 20 µm.

### Résumé de l'invention

De manière surprenante, cet objectif a pu être atteint avec un film thermoformable orienté biaxialement, comprenant une couche présentant une épaisseur comprise entre 4 µm et 20 µm, ladite couche comprenant :
- au moins un composant P1 ; et
- au moins un polyéthylène téréphtalate P2 ;
ledit composant P1 étant choisi parmi les copolyesters P1I, P1C, P1F et leurs mélanges :
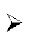 P1I comprenant les unités monomériques suivantes : 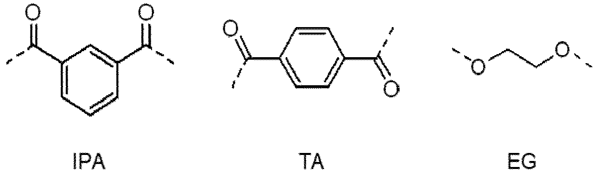
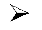 P1C comprenant les unités monomériques suivantes : 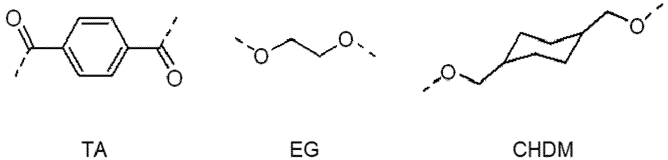
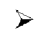 P1F comprenant les unités monomériques suivantes : 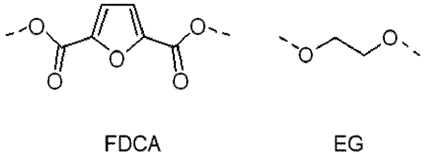 dans lesquelles chaque occurrence de 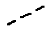 représente une liaison vers une autre unité monomérique, la proportion totale d'unités IPA, FDCA et CHDM, par rapport au nombre total d'unités monomériques du composant P1 et du polyéthylène téréphtalate P2, étant comprise entre 3% molaire et 40% molaire.

L'invention concerne également un procédé de fabrication dudit film, comprenant les étapes successives suivantes :
- E1 : extrusion et trempe sur un tambour de coulée d'un mélange du composant P1 et du polyéthylène téréphtalate P2 pour former un film,
- E2 : étirage transversal et longitudinal du film obtenu à l'issue de l'étape E1, l'étirage transversal pouvant être effectué avant ou après l'étirage longitudinal,
- E3 : une étape de thermofixation,
optionnellement une étape d'enduction, ladite étape d'enduction pouvant être réalisé entre les étapes E1 et E2 ou pendant l'étape E2 entre l'étirage transversal et l'étirage longitudinal.

L'invention porte également sur un emballage alimentaire comprenant ledit film.

### Brève description des dessins

[FIG. 1] La figure 1 est un graphique représentant l'élongation de divers échantillons de films à une température de 110°C en fonction de la force exercée dans le sens longitudinal.
[FIG. 2] La figure 2 est un graphique représentant l'élongation de divers échantillons de films à une température de 130°C en fonction de la force exercée dans le sens longitudinal.
[FIG. 3] La figure 3 est un graphique représentant l'élongation de divers échantillons de films à une température de 160°C en fonction de la force exercée dans le sens longitudinal.
[FIG. 4] La figure 4 est un graphique représentant l'élongation de divers échantillons de films à une température de 110°C en fonction de la force exercée dans le sens transversal.
[FIG. 5] La figure 5 est un graphique représentant l'élongation de divers échantillons de films à une température de 130°C en fonction de la force exercée dans le sens transversal.
[FIG. 6] La figure 6 est un graphique représentant l'élongation de divers échantillons de films à une température de 160°C en fonction de la force exercée dans le sens transversal.
[FIG. 7] La figure 7 représente les échantillons de référence permettant la notation de la qualité d'une impression.

### Description détaillée de l'invention

Ainsi, la présente invention concerne un film thermoformable orienté biaxialement, comprenant une couche présentant une épaisseur comprise entre 4 µm et 20 µm, ladite couche comprenant :
- au moins un composant P1 ; et
- au moins un polyéthylène téréphtalate P2 ;
ledit composant P1 étant choisi parmi les copolyesters P1I, P1C, P1F et leurs mélanges :
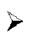 P1I comprenant les unités monomériques suivantes : 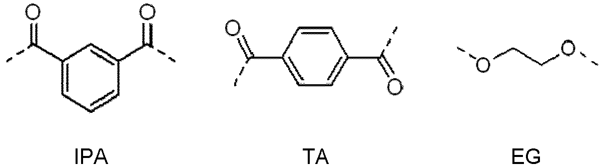
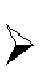 P1C comprenant les unités monomériques suivantes : 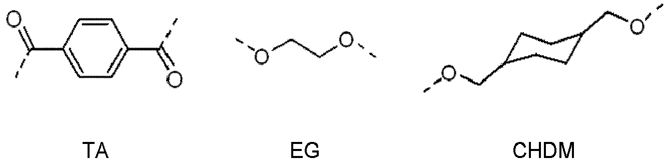
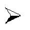 P1F comprenant les unités monomériques suivantes : 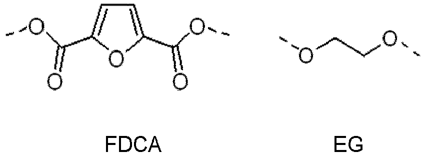 dans lesquelles chaque occurrence de 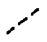 représente une liaison vers une autre unité monomérique, la proportion totale d'unités IPA, FDCA et CHDM, par rapport au nombre total d'unités monomériques du composant P1 et du polyéthylène téréphtalate P2, étant comprise entre 3% molaire et 40% molaire.

### Film

Le film selon l'invention est un film thermoformable orienté biaxialement.

Le caractère thermoformable signifie que le film peut être mis en forme sous l'effet de la chaleur et d'une contrainte mécanique sans se craqueler ou se déchirer et que la forme obtenue est stable, c'est-à-dire qui ne s'affaisse pas.

Plusieurs techniques permettent de déterminer si un film est thermoformable. Une première technique est l'évaluation des propriétés mécaniques en température, selon la norme NF EN ISO 527-3. Une seconde méthode est l'analyse mécanique dynamique comme illustré par la publication de James L. Throne (Technology of Thermoforming chapter 4, Hanser Publishers).

Dans le cadre de la présente invention, la demanderesse a mis au point une analyse thermomécanique. L'élongation à une température donnée d'un échantillon de film est mesurée en augmentant la force appliquée au film dans une éprouvette précontrainte. Pour être qualifié de thermoformable, selon la présente invention, le film doit remplir les critères 1 à 3 suivants :
1. Présenter une élongation supérieure à une droite formée par les points 1a: 0,25%, lorsqu'une force de 90 mN est appliquée au film à une température de 110°C, et 1b : 2 % lorsqu'une force de 250 mN est appliquée au film à une température de 110°C, et inférieure à une droite formée par les points 1c : 4%, lorsqu'une force de 90 mN est appliquée au film à une température de 110°C, et 1d : 14 % lorsqu'une force de 250 mN est appliquée au film à une température de 110°C,
2. Présenter une élongation supérieure à une droite formée par les points 2a : 0,25%, lorsqu'une force de 90 mN est appliquée au film à une température de 130°C, et 2b : 2,75 % lorsqu'une force de 250 mN est appliquée au film à une température de 130°C, et inférieure à une droite formée par les points 2c : 6%, lorsqu'une force de 90 mN est appliquée au film à une température de 130°C, et 2d : 16,25 % lorsqu'une force de 250 mN est appliquée au film à une température de 130°C,
3. Présenter une élongation supérieure à une droite formée par les points 3a : 1%, lorsqu'une force de 90 mN est appliquée au film à une température de 160°C, et 3b : 5 % lorsqu'une force de 250 mN est appliquée au film à une température de 160°C, et inférieure à une droite formée par les points 3c : 9%, lorsqu'une force de 90 mN est appliquée au film à une température de 160°C, et 3d : 25 % lorsqu'une force de 250 mN est appliquée au film à une température de 160°C.

L'orientation biaxiale est obtenue par deux étirages du film sur la ligne de production, un étirage dans le sens dit machine, c'est-à-dire selon la longueur du film, puis un étirage dans le sens dit transversal, c'est-à-dire selon la largeur du film, l'ordre des étirages pouvant être inversé.

Dans le film selon l'invention, ladite couche présente de manière préférée une épaisseur comprise entre 6 µm et 18 µm, de manière plus préférée entre 8 µm et 16 µm, de manière plus préférée encore entre 10 µm et 14 µm et de manière encore plus préférée environ 12 µm.

### Composant P1

Conformément à l'invention, le film comporte une couche comprenant au moins un composant P1. Le composant P1 est un copolyester P1I, un copolyester P1C, un copolyester P1F ou un mélange de deux ou des trois copolyesters P1I, P1C, P1F.

Les copolyesters P1I, P1C, P1F comportent des unités monomériques issues de la polymérisation de deux types de monomères, des monomères présentant deux fonctions acides ou esters et des monomères présentant deux fonctions alcools. Les fonctions alcools réagissent avec les fonctions acides ou esters lors de la polymérisation pour conduire à des polyesters.

Dans un mode de réalisation, ledit composant P1 est choisi parmi les copolyesters P1I et P1C et leurs mélanges, la proportion totale d'unités IPA et CHDM, par rapport au nombre total d'unités monomériques du composant P1 et du polyéthylène téréphtalate P2, étant comprise entre 3% molaire et 20% molaire.

Dans un autre mode de réalisation, ledit composant P1 est le copolyester P1I, la proportion totale d'unités IPA, par rapport au nombre total d'unités monomériques du composant P1 et du polyéthylène téréphtalate P2, étant comprise entre 3% molaire et 13,5% molaire.

Dans un mode de réalisation alternatif, ledit composant P1 est le copolyester P1C la proportion totale d'unités CHDM, par rapport au nombre total d'unités monomériques du composant P1 et du polyéthylène téréphtalate P2, étant comprise entre 4% molaire et 19% molaire.

Dans un mode de réalisation particulier, ledit au moins un composant P1 est choisi parmi les copolyesters P1I, P1C, P1F et leurs mélanges :
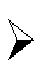 P1I comprenant les unités monomériques suivantes : 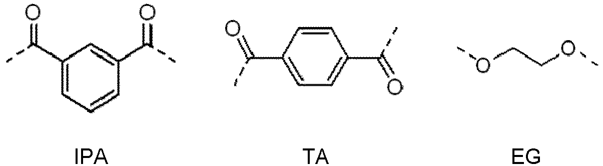 la proportion d'unités IPA étant comprise entre 7,5 % et 17,5 % en mole par rapport au nombre total de moles d'unité monomériques dans le copolyester P1I,
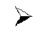 P1C comprenant les unités monomériques suivantes : 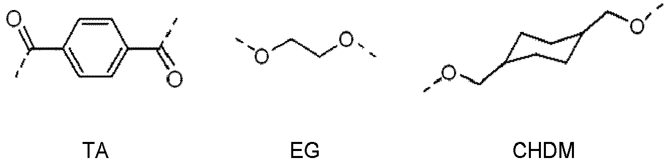 la proportion d'unités CHDM étant comprise entre 10 % et 25 % en mole par rapport au nombre total de moles d'unité monomériques dans le copolyester P1C,
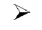 P1F comprenant les unités monomériques suivantes : 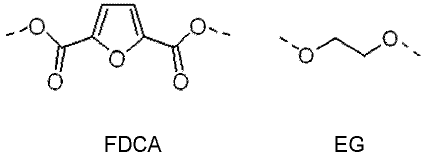
   dans lesquelles chaque occurrence de 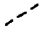 représente une liaison vers une autre unité monomérique,
   la proportion de P1 est comprise entre 40 % en poids et 75% en poids,
   et la proportion de P2 est comprise entre 25 % en poids et 60% en poids.

En d'autres termes, l'invention concerne également un film thermoformable orienté biaxialement, comprenant une couche comprenant :
- au moins un copolyester P1 : choisi parmi les copolyesters P1I, P1C, P1F et leurs mélanges :
   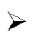 P1I comprenant les unités monomériques suivantes : 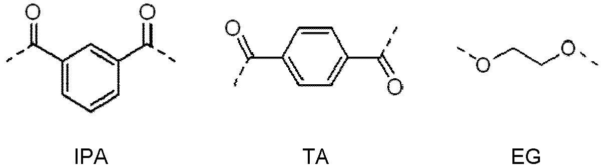 la proportion d'unités IPA étant comprise entre 7,5 % et 17,5 % en mole par rapport au nombre total de moles d'unité monomériques dans le copolyester P1I,
   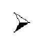 P1C comprenant les unités monomériques suivantes : 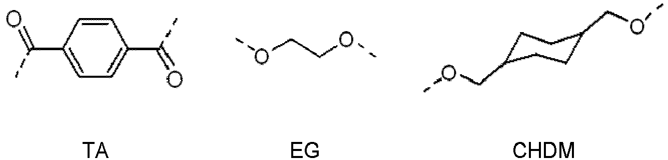 la proportion d'unités CHDM étant comprise entre 10 % et 25% en mole par rapport au nombre total de moles d'unité monomériques dans le copolyester P1C,
   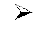 P1F comprenant les unités monomériques suivantes : 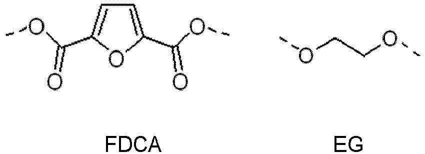 dans lesquelles chaque occurrence de 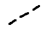 représente une liaison vers une autre unité monomérique,
- un polyéthylène téréphtalate P2,
   la proportion de P1 étant comprise entre 40 % en poids et 75 % en poids,
   la proportion de P2 étant comprise entre 25 % en poids et 60 % en poids,
   ladite couche présentant une épaisseur comprise entre 4 µm et 20 µm.

Le copolyester P1I comprend des unités monomériques issue de l'éthylène glycol (EG) et des unités monomériques issues de l'acide téréphtalique (TA) et de l'acide isophtalique (IPA).

La proportion d'unités IPA est comprise entre 7,5% en mole et 17,5% en mole par rapport au nombre total d'unités monomériques du copolyester P1I, c'est-à-dire le nombre total d'unités monomériques du copolyester P1I, de préférence entre 8% en mole et 12,5% en mole, plus préférentiellement entre 8,25% en mole et 10% en mole. En d'autres termes, la proportion d'unités IPA est comprise entre 15% en mole et 35% en mole par rapport au nombre total de moles d'unité IPA et TA, de préférence entre 16% en mole et 25% en mole, plus préférentiellement entre 16,5% en mole et 20% en mole.

Le copolyester P1C comprend des unités monomériques issue de l'éthylène glycol (EG) et du cyclohexane diméthanol (CHDM) et des unités monomériques issues de l'acide téréphtalique (TA).

La proportion d'unités CHDM est comprise entre 10% en mole et 25% en mole par rapport au nombre total d'unité monomériques du copolyester P1C, de préférence entre 12,5% en mole et 20% en mole, plus préférentiellement entre 15% en mole et 17,5% en mole. En d'autres termes, la proportion d'unités CHDM est comprise entre 20% en mole et 50% en mole par rapport au nombre total de moles d'unité EG et CHDM, de préférence entre 25% en mole et 40% en mole, plus préférentiellement entre 30% en mole et 35% en mole.

De manière préférentielle, le copolyester P1 présente une viscosité comprise entre 0,5 dL/g et 0,85 dL/g, de préférence comprise entre 0,60 dL/g et 0.8 dL/g.

### Polyéthylène téréphtalate P2

Le polyéthylène téréphtalate P2 présent dans le film selon l'invention est un polymère comprenant des unités monomériques TA et des unités monomériques EG. P2 peut être un polyéthylène téréphtalate (PET) vierge ou recyclé ou leur mélange.

Un PET est issu de la polymérisation d'acide téréphtalique et d'éthylène glycol. Le PET est dit vierge si les monomères acide téréphtalique et éthylène glycol sont utilisées directement. Dans ce cas, les monomères peuvent être de source pétrochimique ou biosourcés.

Le terme biosourcé fait référence aux produits issus de la biomasse. La biomasse s'entend de toute matière organique d'origine végétale, animale, bactérienne ou fongique. Dans le cadre de la présente invention, la matière organique est préférentiellement d'origine végétale, comme par exemple, de manière non exhaustive, le bois, les pailles de riz, les coques de riz, le son de riz, le maïs, la canne à sucre ou encore le manioc.

Les PET recyclés sont des PET issus d'un produit contenant du PET qui a été traité afin de récupérer le PET. En fonction de la méthode employée, le PET peut contenir plus ou moins d'impuretés de différentes natures. A ce jour, il existe deux types de recyclage, le recyclage mécanique et le recyclage chimique, tels qu'illustrés par V. M. Nadkarni dans le handbook of thermoplastic polyester, edited by S. Fakirov, chapitre 26, Wiley -VCH, 2002.

De manière préférentielle, le polyéthylène téréphtalate P2 présente une viscosité comprise entre 0,6 dL/g et 0,8 dL/g, préférentiellement comprise entre 0,63 dL/g et 0,75 dL/g, et encore plus préférentiellement entre 0,64 dL/g et 0,65 dL/g.

### Proportion P1/P2

Dans le film selon l'invention, la proportion de P1 est comprise entre 40 % en poids et 75 % en poids. De manière préférée, la proportion de P1 est comprise entre 50 % en poids et 65 % en poids, de manière plus préférée entre 55% en poids et 60 % en poids.

Dans le film selon l'invention, la proportion de P2 est comprise entre 25 % en poids et 60 % en poids. De manière préférée, la proportion de P2 est comprise entre 35 % en poids et 50 % en poids, de manière plus préférée entre 40% en poids et 45 % en poids.

Si la proportion de P1 est trop importante, notamment supérieure à 75 % en poids, le film obtenu est trop élastique et l'objet obtenu par thermoformation du film aura tendance à s'affaisser. Si la proportion de P2 est trop importante, notamment supérieure à 60 % en poids, le film aura tendance à craquer lors de l'élévation de la température et de l'augmentation de la contrainte.

Le film selon l'invention présente une imprimabilité satisfaisante. Cependant, selon le secteur (milieu de gamme, luxe) et selon la finalité du motif de l'impression (décoration, code barre), l'exigence en terme d'imprimabilité ne sera pas la même.

Dans le but d'augmenter la qualité de l'impression, une quantité minimum de 55% en poids de polymère P1 est préférée.

Ainsi, dans un mode préféré de l'invention, la proportion de P1 est comprise entre 55% en poids et 75% en poids et la proportion de P2 est comprise entre 25% en poids et 45% en poids.

### Autres caractéristiques du film

Selon un mode de réalisation particulier, le film selon l'invention contient des particules inorganiques présentant une taille comprise entre 1,5 µm et 6 µm. De manière avantageuse, les particules inorganiques sont choisies parmi la silice (SiO₂), le sulfate de baryum (BaSO₄), l'oxyde d'aluminium (Al₂O₃), le carbonate de calcium (CaCOs), le dioxyde de titane (TiO₂), et leurs mélanges.

Les particules inorganiques peuvent être insérées directement dans le mélange de polymère P1 et P2, elles peuvent également être introduites par l'utilisation d'un polyéthylène téréphtalate P3, comprenant lesdites particules. Ainsi, dans un mode de réalisation particulier, le film comprend en outre un polyéthylène téréphtalate P3 comprenant entre 150 ppm en poids et 14 000 ppm en poids des dites particules inorganiques.

Le film selon l'invention peut comprendre plusieurs couches de polymère. Cependant dans un mode préféré de l'invention le film comporte une seule couche. On entend par couche les parties d'un film qui se superposent lors de l'extrusion. Dans un film multicouche, plusieurs polymères sont coextrudés et assemblés de sorte que plusieurs couches sont formées. En général, une couche présente une épaisseur supérieure à 0,5 µm. Dans un film monocouche, c'est-à-dire qui ne comporte qu'une seule couche, il n'y a pas de coextrusion, les polymères sont mélangés préalablement à l'extrusion. Un film monocouche présente l'avantage d'être plus respectueux de l'environnement car moins d'énergie est utilisée lors de sa production. En outre, un film monocouche offre une plus grande flexibilité dans son utilisation finale.

Le film selon l'invention peut comporter un revêtement d'enduction à base d'acrylique ou de polyuréthane. Un revêtement d'enduction se différencie d'une couche par le fait que le matériau utilisé pour l'enduction n'est pas coextrudé avec le ou les polymères constitutifs du film, mais est appliqué une fois le cast formé. On entend par cast le film amorphe avant étirage, et donc non orienté. De manière alternative, l'enduction peut être réalisée après le premier étirage. Par ailleurs, un revêtement d'enduction présente une épaisseur de type nanométrique, typiquement inférieure à 200 nm.

### Mode de réalisation préféré

Selon un mode préféré de l'invention, le film est un film monocouche thermoformable orienté biaxialement, présentant une épaisseur comprise entre 4 µm et 20 µm, comprenant :
- au moins un composant P1 ; et
- au moins un polyéthylène téréphtalate P2 ;
ledit composant P1 étant choisi parmi les copolyesters P1I, P1C, P1F et leurs mélanges :
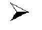 P1I comprenant les unités monomériques suivantes : 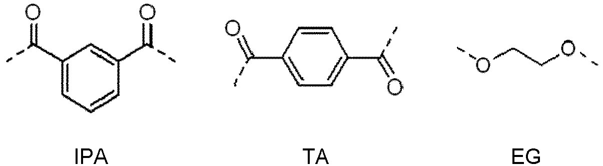
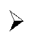 P1C comprenant les unités monomériques suivantes : 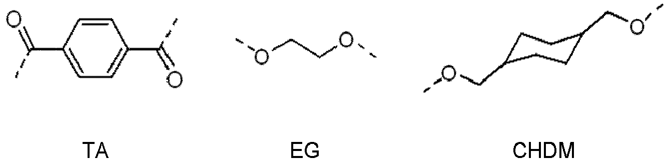
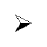 P1F comprenant les unités monomériques suivantes : 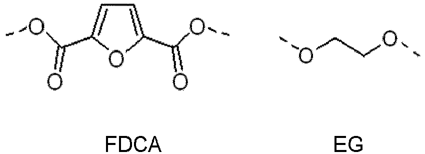
   dans lesquelles chaque occurrence de 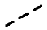 représente une liaison vers une autre unité monomérique,
   la proportion totale d'unités IPA, FDCA et CHDM, par rapport au nombre total d'unités monomériques du composant P1 et du polyéthylène téréphtalate P2, étant comprise entre 3% molaire et 40% molaire,
   la proportion de P1 étant comprise entre 55 % en poids et 75% en poids,
   et la proportion de P2 est comprise entre 25 % en poids et 45% en poids.

En effet, comme il peut s'en déduire de ce qui précède, le mode de réalisation préféré de l'invention permet d'obtenir, outre le caractère thermoformable, un film présentant une imprimabilité remarquable et être plus respectueux de l'environnement car moins d'énergie est utilisée lors de sa production tout en apportant une plus grande flexibilité dans son utilisation finale.

### Procédé de fabrication du film

Comme mentionné précédemment, l'invention concerne également un procédé de fabrication du film tel que décrit précédemment. Ledit procédé comprend les étapes successives suivantes :
- E1 : extrusion sur un tambour de coulé d'un mélange de polymères P1 et P2 pour former un film,
- E1b : optionnellement enduction du film obtenu à l'étape E1,
- E2 : étirage transversal et longitudinal du film obtenu à l'issue de l'étape E1 ou de l'étape E1b, l'étirage transversal pouvant être effectué avant ou après l'étirage longitudinal
- E3 : une étape de thermofixation.

### Etape E1

L'étape E1 est une étape d'extrusion et de trempe sur un tambour de coulé. Concrètement, un mélange de polymères P1 et P2 est préparé et fondu puis extrudé dans une extrudeuse et coulé sur un tambour pour former un cast. Préférentiellement, le procédé comporte une étape E0 de mélange et de séchage des polymères préalablement à l'étape E1.

### Etape E2

Afin d'obtenir un film orienté biaxialement, le cast obtenu à l'issue de l'étape E1, ou de l'étape E1b est étiré dans le sens longitudinal et dans le sens transversal. L'étirage longitudinal est effectué dans le sens dit « machine », c'est-à-dire dans le sens de rotation du tambour. L'étirage transversal est effectué dans le sens perpendiculaire au sens di « machine », c'est-à-dire perpendiculairement au sens de rotation du tambour. La personne du métier sait ajuster le taux d'étirage en fonction du film.

Dans un mode de réalisation, l'étirage transversal est effectué avant l'étirage longitudinal. Dans un autre mode de réalisation, l'étirage longitudinal est effectué avant l'étirage transversal.

Dans un mode de réalisation, lors de l'étape E2 l'étirage longitudinal est réalisé à une température comprise entre 70°C et 120°C et l'étirage transversal est réalisé à une température comprise entre 90°C et 120°C.

### Etape E3

A la fin du procédé de fabrication du film selon l'invention, celui-ci est thermofixé en étape E3. L'étape E3 de thermofixation est réalisée à une température comprise entre 170°C et 230°C, préférentiellement entre 180°C et 220°C, plus préférentiellement entre 190°C et 210°C, et encore plus préférentiellement à une température d'environ 200°C.

### Etape optionnelle d'enduction

Le procédé selon l'invention comprend optionnellement une étape d'enduction, ladite étape d'enduction pouvant être réalisé entre les étapes E1 et E2 ou pendant l'étape E2 entre l'étirage transversal et l'étirage longitudinal.

En d'autres termes, lorsque l'étape optionnelle d'enduction est réalisée pendant l'étape E2, l'étape E2 peut être mise en oeuvre soit en suivant la séquence « étirage transversal-enduction-étirage longitudinal » soit en suivant la séquence « étirage longitudinal-enduction-étirage transversal ».

L'étape optionnelle d'enduction peut être réalisée avec un enduit à base d'acrylique ou de polyuréthane. Toutes les méthodes d'enduction connues de la personne du métier peuvent être utilisées pour la mise en oeuvre de l'étape optionnelle d'enduction.

### Thermoformaqe du film

Le film selon l'invention peut être thermoformé selon toute technique connue de la personne du métier. On peut citer par exemple Jean-Claude JAMMET, Francis PINSOLLE Thermoformage, Techniques de l'Ingénieur, Réf : AM3660 v2 Date de publication : 10 nov. 2019.

### Impression sur le film

Le film selon l'invention est imprimable par toute technique connue de la personne du métier. On peut par exemple cités les techniques telles que l'héliogravure, la flexographie, l'offset et l'impression digitale.

### Utilisation du film

Le film selon l'invention peut être utilisé dans différents domaines d'application. Un domaine privilégié est l'industrie alimentaire. Le thermoformage permet de donner une forme au film selon l'invention pour la fabrication de contenants. En particulier il est possible de fabriquer un emballage alimentaire comprenant le film tel que décrit précédemment.

Le film selon l'invention, qu'il soit monocouche ou multicouches, peut être laminé sur un support, un particulier un support en PET cast, en polymère tels que des polypropylènes et des polyéthylènes ou encore un support métallique. Les procédés de lamination correspondent à l'assemblage de plusieurs films en complexe afin d'obtenir des emballages alimentaires soit en utilisant un adhésif sans solvant, soit en utilisant un adhésif avec solvant (on parle de complexage). Il existe d'autres techniques possibles comme l'extrusion / lamination ou l'extrusion / couchage comme divulgué dans l'article de Pierre Chomon et Bernard Charnier, Techniques de l'Ingénieur, publié en 2017 sous la référence AM3577 v2.

De manière alternative, le film selon l'invention, qu'il soit monocouche ou multicouches, peut être collé sur un support.

### Exemples

### Exemple 1 : Thermoformabilité des films selon l'invention

Sept mélanges de polymères ont été préparés puis extrudés sur tambour pour former six films. Les compositions des mélanges de polymères sont répertoriées dans le tableau 1 ci-dessous.

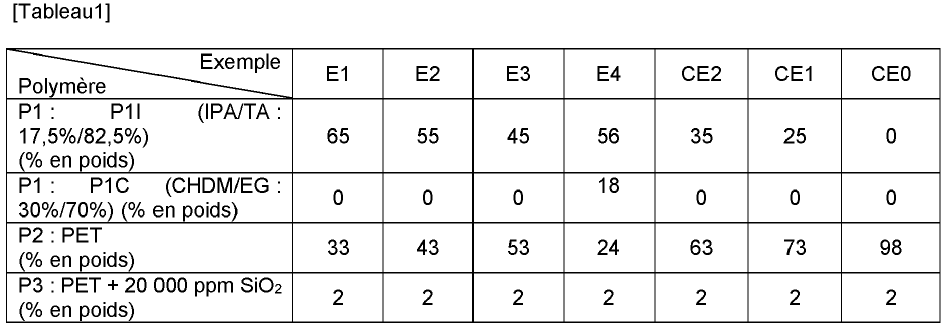

Les mélanges utilisés pour la préparation des films E1 à E4 répondent à l'invention et les mélanges utilisés pour la préparation des films CE0, CE1 et CE2 sont hors de l'invention.

Les sept films ont ensuite été étirés biaxialement, avec un taux d'étirage longitudinal de 3,5 et un taux d'étirage transversal 4. Les six films ont été thermofixés à une température de 220 °C.

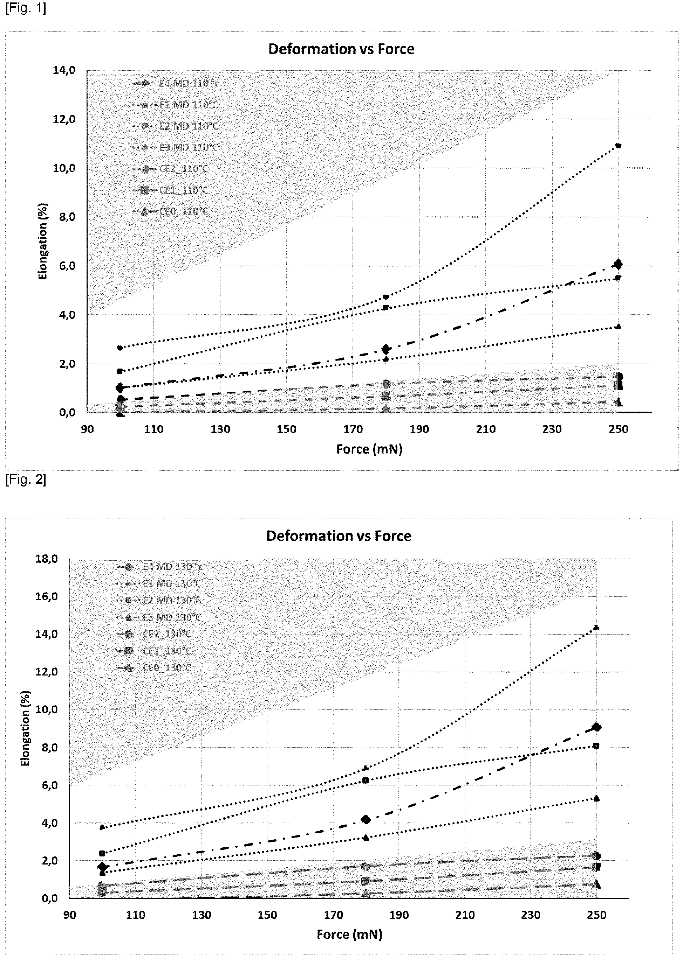

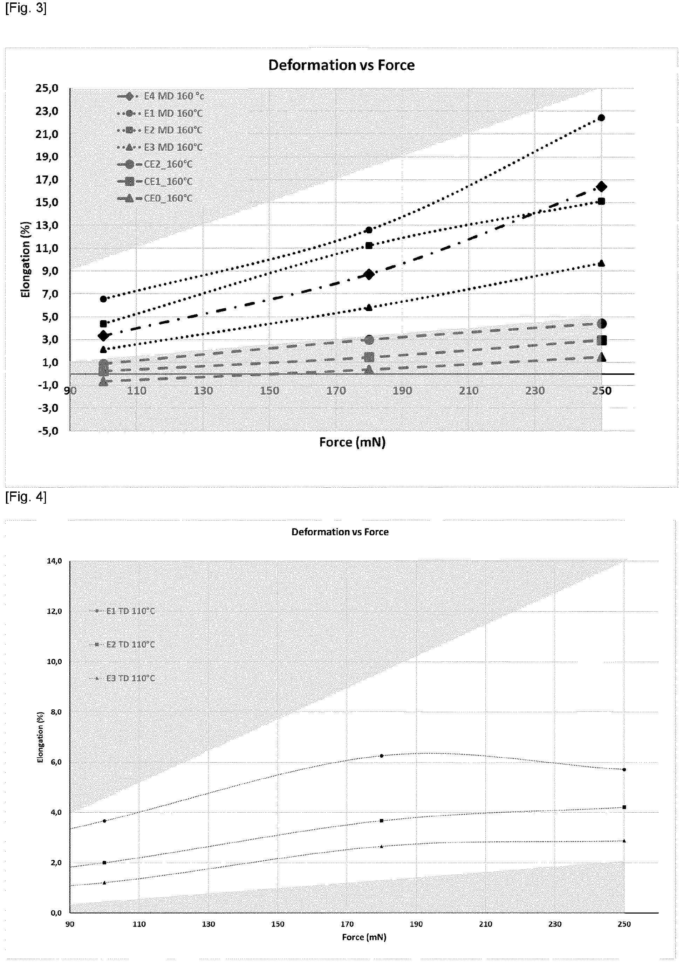

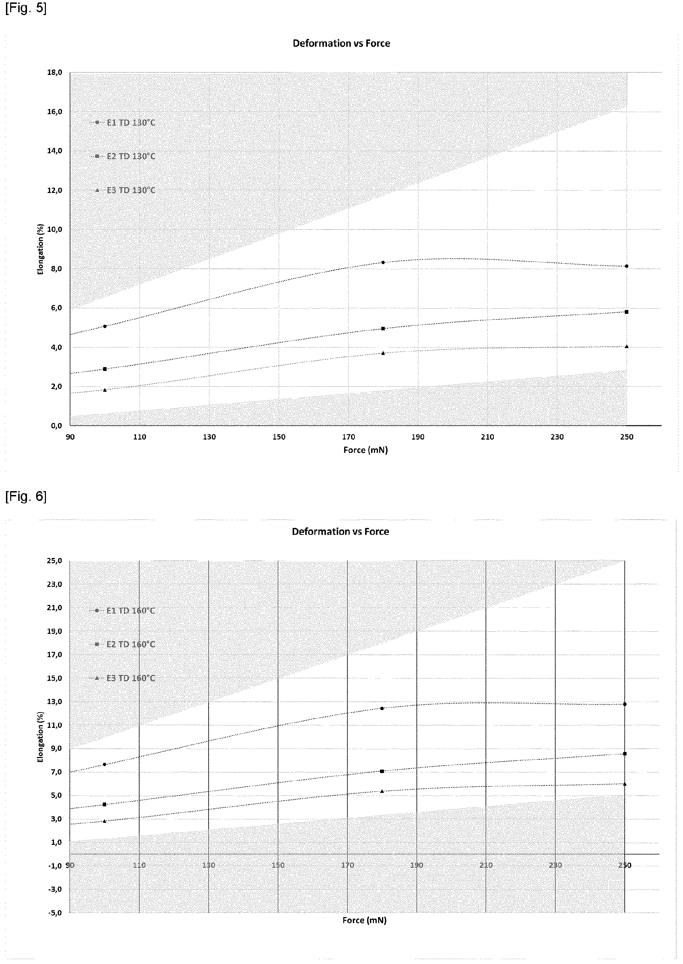

Les films ont été échantillonnés sous forme de rectangles de 20 mm de longueur et 4 mm de largeur. Ces échantillons ont ensuite été analysé par analyse thermomécanique en appliquant une température donnée (110°C, 130°C et 160°C) et un gradient de contrainte mécanique (de 40 mN à 250 mN) dans les deux sens d'étirage. Les résultats sont répertoriés dans les figures 1 à 6.

Les films E1, E2, E3 et E4 présentent tous une déformation suffisante sans craquelure, mais pas trop importante, ils sont donc thermoformables.

Les films CE0, CE1 et CE2 ne se déforment pas suffisamment pour être thermoformables et se craquèlent. La quantité de polymère P1 est trop faible.

### Exemple 2 : imprimabilité des films selon l'invention

Les films E1, E2, E3, E4, CE0, CE1 et CE2 ont été imprimés à l'aide d'un appareil K303 Gravure de RK PrintCoat Instruments Ltd avec une encre de la société Siegwerk (référence NC-191-6 bleu) dilué avec comme solvant un mélange acétate d'éthyle/éthanol de composition 70/30 et un rapport massique 100 encre + 40 solvant. Les films imprimés sont ensuite placés dans un four.

La qualité des impressions a été testé selon le test FINAT no. 21 FTM 21 selon le protocole suivant.

L'adhésion de l'encre est évaluée par la quantité d'encre qui peut être retirée quand un ruban adhésif est appliqué et décollé.

La résistance de l'encre à l'enlèvement mécanique est également mesurée soit en grattant l'encre, soit par déformation sous pression.

Pour ce faire on utilise un ruban adhésif à forte force d'adhésion « agressif », par exemple Tesa 7475 (base acrylique), Tesa 7476 (base caoutchouc), ou 3M Scotch 810, un rouleau FINAT pour appliquer le ruban sur les échantillons, une spatule métallique et des gants

Les essais sont réalisés à 23°C ± 2°C et une humidité relative de 50 ± 5 %.

L'échantillon à tester doit, de préférence, être conditionné pendant au moins 4 heures avant le test.

Le mode opératoire pour le test au ruban adhésif est le suivant :

Coucher l'échantillon sur une surface lisse et plane, appliquer le ruban adhésif en ayant soin de laisser une petite partie du ruban non collée sur l'échantillon, et en s'assurant qu'il n'y a pas de bulles d'air emprisonnées sous le ruban.

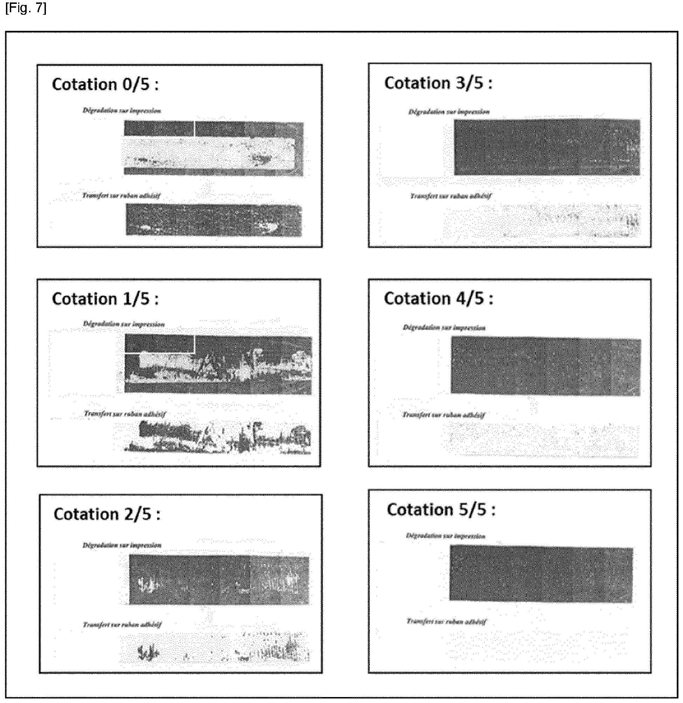

Appliquer deux fois le rouleau FINAT dans chaque direction sur l'échantillon, plier ensuite la partie non attachée du ruban sur lui-même en faisant un angle de 180°. Attendre 20 minutes. Placer ensuite l'échantillon dans un cadre ou utiliser une main pour maintenir fermement l'échantillon, tirer ensuite la partie de ruban non collée vers vous en utilisant l'autre main, dans un premier temps lentement à vitesse constante, ensuite rapidement en accélérant (plus la vitesse est rapide, plus le test est agressif). La performance de l'échantillon est déterminée par comparaison avec des échantillons de référence avec une notation de 0 à 5 comme représenté à la figure 7 :

**[Tableau 2]**

| E1 | E2 | E3 | E4 | CE2 | CE1 | CE0 |
|---|---|---|---|---|---|---|
| 4 | 4 | 3 | 4 | 2-3 | 2 | 1 |

En fonction des secteurs (milieu de gamme, luxe) et de la finalité du motif de l'impression (décoration, code barre), l'exigence sur la note obtenue ne sera pas la même. Ainsi, un film présentant une note comprise entre 3 et 5 traduit une imprimabilité suffisante pour être considéré comme un film imprimable. Cependant, les fims selon les exemples E1, E2 et E4 présentent une imprimabilité supérieure au film de l'exemple E3. Ainsi, dans le secteur du luxe et/ou si la finalité du motif de l'impression est décorative, le film de l'exemple E3 ne sera pas considéré comme imprimable de manière satisfaisante.

Les films selon l'invention présentent tous une imprimabilité satisfaisante, tandis que les films hors invention, ne contenant pas la quantité minimale requise de polymère P1, ne sont pas imprimables.

## Revendications

1. Film thermoformable orienté biaxialement, comprenant une couche présentant une épaisseur comprise entre 4 µm et 20 µm, ladite couche comprenant :
• au moins un composant P1 ; et
• au moins un polyéthylène téréphtalate P2 ;
ledit composant P1 étant choisi parmi les copolyesters P1I, P1C, P1F et leurs mélanges :
➢ P1I comprenant les unités monomériques suivantes : 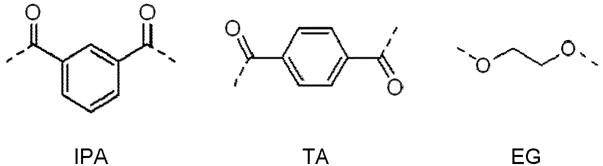
> P1C comprenant les unités monomériques suivantes : 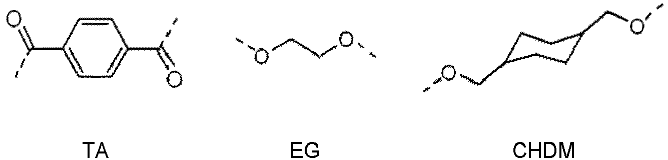
➢ P1F comprenant les unités monomériques suivantes : 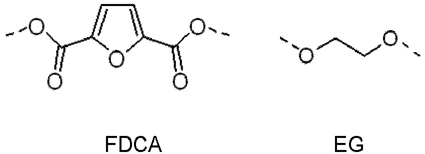
dans lesquelles chaque occurrence de 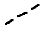 représente une liaison vers une autre unité monomérique,
la proportion totale d'unités IPA, FDCA et CHDM, par rapport au nombre total d'unités monomériques du composant P1 et du polyéthylène téréphtalate P2, étant comprise entre 3% molaire et 40% molaire.

2. Film thermoformable selon la revendication 1, **caractérisée en ce que** ledit composant P1 est choisi parmi les copolyesters P1I et P1C, et leurs mélanges,
la proportion totale d'unités IPA et CHDM, par rapport au nombre total d'unités monomériques du composant P1 et du polyéthylène téréphtalate P2, étant comprise entre 3% molaire et 20% molaire.

3. Film thermoformable selon la revendication 1, **caractérisée en ce que** ledit composant P1 est le copolyester P1I,
la proportion totale d'unités IPA, par rapport au nombre total d'unités monomériques du composant P1 et du polyéthylène téréphtalate P2, étant comprise entre 3% molaire et 13,5% molaire.

4. Film thermoformable selon la revendication 1, **caractérisée en ce que** ledit composant P1 est le copolyester P1C,
la proportion totale d'unités CHDM, par rapport au nombre total d'unités monomériques du composant P1 et du polyéthylène téréphtalate P2, étant comprise entre 4% molaire et 19% molaire.

5. Film thermoformable selon la revendication 1, **caractérisée en ce que** ledit au moins un composant P1 est choisi parmi les copolyesters P1I, P1C, P1F et leurs mélanges :
➢ P1I comprenant les unités monomériques suivantes : 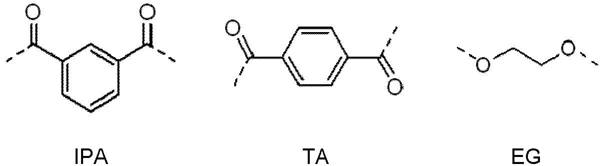 la proportion d'unités IPA étant comprise entre 7,5 % et 17,5 % en mole par rapport au nombre total de moles d'unité IPA et TA dans le copolyester P1I,
➢ P1C comprenant les unités monomériques suivantes : 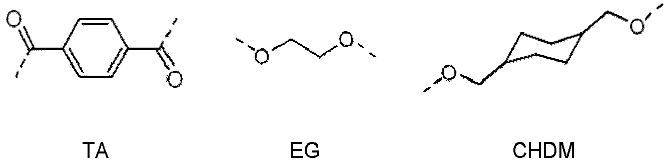 la proportion d'unités CHDM étant comprise entre 10 % et 25 % en mole par rapport au nombre total de moles d'unité CHDM et EG dans le copolyester P1C,
➢ P1F comprenant les unités monomériques suivantes : 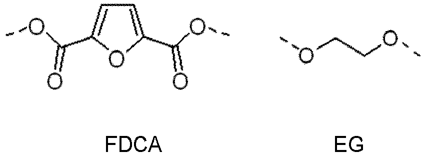
dans lesquelles chaque occurrence de 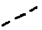 représente une liaison vers une autre unité monomérique,
et **en ce que** la proportion de P1 est comprise entre 40 % en poids et 75% en poids,
et la proportion de P2 est comprise entre 25 % en poids et 60% en poids.

6. Film thermoformable selon l'une quelconque des revendications 1 à 5, **caractérisé en ce que** ladite couche contient des particules inorganiques présentant une taille comprise entre 1,5 µm et 6 µm.

7. Film thermoformable selon la revendication 6, **caractérisé en ce que** ladite couche comprend en outre un polyéthylène téréphtalate P3, comprenant entre 150 ppm en poids et 14 000 ppm en poids desdites particules inorganiques.

8. Film thermoformable selon l'une quelconque des revendications 1 à 7, **caractérisé en ce qu'**il comporte une seule couche.

9. Film thermoformable selon l'une des quelconque revendications 1 à 8, **caractérisé en ce qu'**il comporte un revêtement d'enduction à base d'acrylique ou de polyuréthane.

10. Film thermoformable selon l'une quelconque des revendications 1 à 9, **caractérisé en ce que** P2 est un polyéthylène téréphtalate (PET) vierge, un polyéthylène téréphtalate (PET) recyclé ou leurs mélanges.

11. Film thermoformable selon l'une des revendications précédentes, **caractérisé en ce qu'**il est monocouche, et **en ce qu'**il présente une épaisseur comprise entre 4 µm et 20 µm.

12. Film thermoformable selon la revendication 11, **caractérisé en ce que** la proportion de P1 est comprise entre 55 % en poids et 75% en poids, et la proportion de P2 est comprise entre 25 % en poids et 45% en poids.

13. Procédé de fabrication du film selon l'une quelconque des revendications précédentes, comprenant les étapes successives suivantes :
• E1 : extrusion et trempe sur un tambour de coulé d'un mélange de copolyester P1 et de polyéthylène téréphthalate P2 pour former un film,
• E2 : étirage transversal et longitudinal du film obtenu à l'issue de l'étape E1, l'étirage transversal pouvant être effectué avant ou après l'étirage longitudinal, l'étirage longitudinal est réalisé de préférence à une température comprise entre 70°C et 120°C et l'étirage transversal est réalisé de préférence à une température comprise entre 90°C et 120°C,
• E3 : une étape de thermofixation, préférentiellement à une température comprise entre 170°C et 230°C,
optionnellement une étape d'enduction, ladite étape d'enduction pouvant être réalisé entre les étapes E1 et E2 ou pendant l'étape E2 entre l'étirage transversal et l'étirage longitudinal.

14. Emballage alimentaire comprenant le film selon l'une des revendications 1 à 12.
